# EUROPÄISCHE PATENTSCHRIFT

(11) **EP 4 261 630 B1**
(45) Veröffentlichungstag und Bekanntmachung des Hinweises auf die Patenterteilung: **28.08.2024**
(21) Anmeldenummer: 22168225.5
(22) Anmeldetag: 13.04.2022
(51) Int. Cl.: G05B 19/045

(54) **VERFAHREN UND VORRICHTUNG ZUR PARAMETRIERUNG EINES ZUSTANDSAUTOMATEN VON FUNKTIONSBLÖCKEN EINER SICHERHEITSSTEUERUNG**
METHOD AND DEVICE FOR ADJUSTING THE PARAMETERS OF A STATUS UNIT OF FUNCTION BLOCKS OF A SAFETY CONTROL
PROCÉDÉ ET DISPOSITIF DE PARAMÉTRAGE D'UN AUTOMATE FINI À PARTIR DE BLOCS DE FONCTION D'UNE COMMANDE DE SÉCURITÉ

(43) Veröffentlichungstag der Anmeldung: 18.10.2023
(73) Patentinhaber: SICK AG, 79183 Waldkirch (DE)
(72) Erfinder: Häfner, Mario, 79395 Neuenburg (DE); Moddemann, Jörg, 79312 Emmendingen (DE)
(74) Vertreter: Manitz Finsterwald Patent- und Rechtsanwaltspartnerschaft mbB

(56) Entgegenhaltungen:
- DE-A1- 102017 205 832
- DE-B4- 102004 042 549

## Beschreibung

Die Erfindung betrifft ein Verfahren und eine Vorrichtung zur Parametrierung eines Zustandsautomaten, insbesondere zur Definition von Funktionsblöcken einer Sicherheitssteuerung, insbesondere in einer Industrieanlage.

Verfahren und Vorrichtungen zur Parametrierung sind prinzipiell aus dem Stand der Technik bekannt. Insbesondere sind Verfahren und Vorrichtungen bekannt, bei denen die Parametrierung durch einen Applikationsspezialisten bei der Entwicklung der Sicherheitssteuerung programmiert wird.

Aus der Druckschrift DE 10 2004 042 549 B4 ist ein Zustandsautomat-Funktionsblock mit durch den Nutzer veränderlicher Ausgangskonfigurationsdatenbank bekannt. In der Druckschrift DE 10 2017 205 832 A1 ist ein Verfahren zum Parametrieren eines Feldgerätes sowie ein parametrierbares Feldgerät beschrieben.

Es ist daher eine Aufgabe der vorliegenden Erfindung, verbesserte Verfahren und Vorrichtungen zur Parametrierung eines Zustandsautomaten von Funktionsblöcken einer Sicherheitssteuerung bereitzustellen.

Diese Aufgabe wird zunächst gelöst durch ein Verfahren zur Parametrierung eines Zustandsautomaten von Funktionsblöcken einer Sicherheitssteuerung, umfassend ein Bereitstellen einer Eingabemaske an einem Benutzerendgerät, ein Erfassen einer Benutzereingabe an der Eingabemaske, wobei die Benutzereingabe einen Parameter für eine Funktion eines Zustandsautomaten definiert, ein Übertragen des Parameters an die Sicherheitssteuerung, das Implementieren des Parameters in dem Zustandsautomaten, ein Auslesen einer Funktionsbeschreibung des Zustandsautomaten umfassend den zuvor implementierten Parameter, ein Übertragen der Funktionsbeschreibung an ein Benutzerendgerät und ein Anzeigen einer Funktion des Zustandsautomatenbasierend auf der Funktionsbeschreibung auf einem Bildschirm des Benutzerendgeräts.

Das erfindungsgemäße Verfahren dient dabei der Parametrierung eines Zustandsautomaten eines oder mehrerer Funktionsblöcke einer Sicherheitssteuerung. Die Sicherheitssteuerung ist dabei insbesondere eine Sicherheitssteuerung für eine oder mehrere Maschinen in einer Industrieanlage. Bei der Sicherheitssteuerung kann es sich insbesondere um eine Sicherheitssteuerung handeln, die eine Sicherheitsanforderungsstufe erfüllt, insbesondere die Sicherheitsanforderungsstufe SIL1, SIL2, SIL3 und/oder SIL4.

Parametrieren meint im vorliegenden Kontext das Einprägen von Funktionalität in Form eines Zustandsautomaten in einem Funktionsblock. Ein Zustandsautomat ist ein Modell einer Funktion, bestehend aus Zuständen, Zustandsübergängen und Aktionen.

Ein Funktionsblock, der auch als Logikbaustein bezeichnet werden kann, ist vorliegend eine Untereinheit einer Steuerung, insbesondere einer Sicherheitssteuerung, die eine bestimmte bzw. vorbestimmte Funktion erfüllt und damit zur Steuerung einer oder mehrerer Maschinen in einer Industrieanlage beiträgt. Solche Funktionen umfassen beispielsweise Öffnungs- und Schließzeiten von Ventilen und Lichtschranken, Betätigungen und Betätigungsdauern von Aktoren, sowie das Auslesen von Sensoren.

Ein Parameter ist in diesem Zusammenhang ein Wert, insbesondere ein Zahlenwert und/oder ein Boolescher Wert, der eine oder mehrere Funktionen eines Zustandsautomaten definiert.

In einem ersten Schritt wird an einem Benutzerendgerät eine Eingabemaske bereitgestellt. Ein Benutzerendgerät ist ein Endgerät mit einer Eingabeschnittstelle und einer Ausgabeschnittstelle, wie beispielsweise ein handelsüblicher Personalcomputer oder Laptop. Ein Benutzerendgerät kann ebenso ein Tablet oder ein Smartphone sein. Eine Eingabemaske ist z.B. ein Eingabebild, auf dem ein oder mehrere Werte eingegeben werden können. Die Eingabemaske wird dabei über eine Ausgabeschnittstelle, wie beispielsweise einem Bildschirm oder einem Monitor bereitgestellt, das heißt angezeigt bzw. ausgegeben.

In einem weiteren Schritt wird eine Benutzereingabe an der Eingabemaske erfasst. Die Benutzereingabe kann dabei beispielsweise über eine Eingabeschnittstelle des Benutzerendgeräts durch einen Benutzer bereitgestellt werden. Die Eingabeschnittstelle kann dabei eine physikalische Tastatur und/oder Maus sein oder ein Touchscreen, auf dem beispielsweise eine Bildschirmtastatur angezeigt wird, oder ein Datenspeicher. Die Benutzereingabe definiert dabei einen Parameter für zumindest eine Funktion zumindest eines Zustandsautomaten. Insbesondere umfasst die Benutzereingabe eine Parametrierung, wobei der Parameter für die Funktion des Zustandsautomaten basierend auf der Parametrierung erzeugt wird.

In einem weiteren Schritt wird der zuvor von dem Benutzer eingegebene und erfasste Parameter an die Sicherheitssteuerung übertragen. Das Übertragen erfolgt dabei elektronisch und kann insbesondere kabelgebunden oder drahtlos über geeignete Schnittstellen an dem Benutzerendgerät und der Sicherheitssteuerung erfolgen.

In einem weiteren Schritt wird der übertragene Parameter in dem dafür vorgesehenen Zustandsautomaten der Sicherheitssteuerung implementiert. Das Implementieren kann dabei insbesondere mithilfe eines dafür vorgesehenen Implementierungsmoduls erfolgen, das den Parameter in einen Speicher des Funktionsblocks schreibt. Beispielsweise kann für den Funktionsblock zunächst eine (auszuführende) Funktionsblockinstanz erzeugt werden, wobei der Funktionsblockinstanz dann der Parameter zugewiesen und damit in den Funktionsblock implementiert wird. Durch das Implementieren wird die Funktionalität des Funktionsblocks zum Implementierungszeitpunkt festgelegt. Insbesondere erfolgt durch die Parametrierung eine (erstmalige) Funktionsbeschreibung des Funktionsblocks durch den Zustandsautomaten.

In einem weiteren Schritt wird eine Funktionsbeschreibung des Zustandsautomaten der Sicherheitssteuerung ausgelesen. Die Funktionsbeschreibung umfasst dabei zumindest den zuvor implementierten Parameter. Die Funktionsbeschreibung kann weiter beispielsweise die Art der Funktion, die der Zustandsautomat erfüllt, eine Verknüpfung mit anderen Funktionsblöcken, weitergehende Informationen zu dem oder den Funktionsblöcken und/oder der Sicherheitssteuerung sowie eine eindeutige Identifizierung des Funktionsblocks umfassen. Dies kann ebenfalls mithilfe des dafür vorgesehenen Implementierungsmoduls erfolgen, das die Funktionsbeschreibung anhand von in dem Speicher hinterlegten Angaben zum Funktionsblock und dessen Funktionen ausliest.

In einem weiteren Schritt wird die zuvor ausgelesene Funktionsbeschreibung an ein Benutzerendgerät übertragen. Dabei kann es sich um dasselbe Benutzerendgerät handeln, auf dem zuvor die Eingabemaske bereitgestellt und der Parameter erfasst wurde, oder um ein von diesem ersten Benutzerendgerät verschiedenes, zweites Benutzerendgerät. Beispielsweise ist das erste Benutzerendgerät ein Endgerät, das von einem Benutzer oder Bediener der Sicherheitsfunktion verwendet wird und das zweite Benutzerendgerät ist ein Endgerät, das von einem Servicetechniker, beispielsweise von einem Hersteller der Sicherheitsfunktion verwendet wird.

Das Übertragen erfolgt dabei elektronisch und kann insbesondere kabelgebunden oder drahtlos über geeignete Schnittstellen an dem Benutzerendgerät und der Sicherheitssteuerung erfolgen.

In einem weiteren Schritt wird eine Funktion des Zustandsautomaten basierend auf der zuvor übertragenen Funktionsbeschreibung auf einem Bildschirm des Benutzerendgeräts angezeigt. Die Funktion kann dabei in der Eingabemaske angezeigt werden oder in einer davon verschiedenen Art und Weise.

Durch die erfindungsgemäße Lösung ist es möglich, Zustandsautomaten in Funktionsblöcken einer Sicherheitssteuerung durch Parametrierung zu definieren. Diese Parametrierung kann nach Abschluss der Produktentwicklung der Sicherheitssteuerung und somit nach Finalisierung der Sicherheits-Firmware erfolgen, beispielsweise in der Produktionslinie, durch Applikationsspezialisten oder durch den Endanwender.

Insbesondere wird durch die erfindungsgemäße Lösung vermieden, dass Funktionsblöcke aufwändig frei programmiert werden müssen und gleichzeitig erreicht, dass sicherheitsrelevante Funktionen nicht bei jeder Änderung der Funktion erneut überprüft werden müssen, da lediglich die Parametrierung eines Zustandsautomaten in eng vorgegebenen Grenzen ermöglicht wird.

Dabei wird insbesondere durch das erneute, insbesondere unmittelbare Auslesen und Anzeigen der Funktion eine einfache und schnelle Validierung der zuvor getätigten Eingabe ermöglicht, insbesondere auch durch einen Servicetechniker, der an einem von der Sicherheitsfunktion entfernten Ort ist.

Das Verfahren kann dadurch weitergebildet werden, dass es weiter ein Anzeigen einer Aufforderung zur Verifikation oder Falsifikation der angezeigten Funktion an dem Benutzerendgerät und ein Erfassen einer Benutzereingabe an dem Benutzerendgerät, wobei die Benutzereingabe eine Verifikation oder Falsifikation der angezeigten Funktion umfasst.

Die Aufforderung zur Verifikation oder Falsifikation wird dabei insbesondere an dem Benutzerendgerät angezeigt, an dem auch die Funktion, die auf der zuvor ausgelesenen und übertragenen Funktionsbeschreibung basiert, angezeigt wurde.

Die Verifikation oder Falsifikation kann dabei insbesondere über eine Benutzereingabe an einer Eingabeschnittstelle erfolgen, beispielsweise über eine Auswahl einer angezeigten Eingabeaufforderung, wie einem Dialogfenster mit einem oder mehreren Buttons.

Wenn die Benutzereingabe eine Falsifikation der angezeigten Funktion umfasst, umfasst das Verfahren weiter ein erneutes Bereitstellen einer Eingabemaske an einem Benutzerendgerät. Es wird somit erneut ein Eingabeprozess gestartet und der Parameter erneut erfasst und an die Sicherheitssteuerung übertragen.

Wenn die Benutzereingabe eine Verifikation der angezeigten Funktion umfasst, umfasst das Verfahren weiter ein erneutes Übertragen des Parameters an die Sicherheitssteuerung und ein erneutes Implementieren des Parameters in dem Zustandsautomaten.

Alternativ kann bei einer Verifikation auch nichts unternommen werden, das heißt der Parameter nicht erneut an die Sicherheitssteuerung übertragen und dort implementiert werden.

Weiter alternativ kann bei einer Verifikation ein weiterer Parameter an die Sicherheitssteuerung übertragen werden, der die Verifikation umfasst bzw. die Verifikation in der Sicherheitssteuerung kennzeichnet. Insbesondere kann in diesem Fall der bereits übertragene Parameter im Nachhinein verifiziert werden, obwohl dieser bereits an die Sicherheitssteuerung übertragen wurde. Insbesondere kann die Sicherheitssteuerung aus Sicherheitsgründen bis zur Verifikation funktional eingeschränkt bleiben und nur einen Testbetrieb ermöglichen. Durch das nachträgliche Verifizieren kann dann eine bestehende funktionale Einschränkung entfallen und ein uneingeschränkter produktiver Betrieb wird ermöglicht.

Weiter alternativ kann das Anzeigen einer Aufforderung zur Verifikation oder Falsifikation der Funktion an dem Benutzerendgerät auch vor einem, insbesondere erstmaligen, Übertragen des Parameters an die Sicherheitssteuerung erfolgen und im Falle der Falsifikation der Parameter überhaupt nicht an die Sicherheitssteuerung übertragen werden, sondern das Verfahren abgebrochen werden und/oder das Verfahren erneut von vorne beginnen und erneut eine Eingabemaske an einem Benutzerendgerät bereitgestellt werden.

Das Verfahren kann dadurch weitergebildet werden, dass es, wenn die Benutzereingabe eine Falsifikation der angezeigten Funktion umfasst, weiter ein Ausgeben einer Warnmeldung umfasst. Die Warnmeldung kann dabei auf demselben Benutzerendgerät ausgegeben werden, auf dem zuvor die Aufforderung zur Verifikation oder Falsifikation angezeigt wurde. Insbesondere wird, wenn die Benutzereingabe eine Falsifikation umfasst, der Parameter nicht an die Sicherheitssteuerung übertragen.

Das Verfahren kann dadurch weitergebildet werden, dass es, wenn die Benutzereingabe eine Falsifikation der angezeigten Funktion umfasst, weiter ein Auslösen einer Sicherheitsfunktion der Sicherheitssteuerung umfasst. Eine Sicherheitsfunktion ist beispielsweise ein Überführen der Industrieanlage in einen Sicherheitsmodus oder ein vollständiges Herunterfahren der Industrieanlage.

Alternativ zur Auslösung einer Sicherheitsfunktion kann auch ein Betrieb des Sicherheitssteuerung verhindert werden.

Insbesondere kann auch, insbesondere alternativ, der bereits an die Sicherheitssteuerung übertragene Parameter als nicht verifiziert und/oder ungültig gekennzeichnet werden. Dies kann insbesondere durch Übertragung eines weiteren Parameters, der die Falsifikation und/oder Ungültigkeit des zuvor übertragenen Parameters umfasst, erfolgen.

Solche Weiterbildungen sind besonders sicher. Insbesondere wird so verhindert, dass ein falscher Parameter, der sich durch einen Übertragungsfehler oder einen Tippfehler ergeben hat, in der Sicherheitssteuerung implementiert wird.

Das Verfahren kann dadurch weitergebildet werden, dass das Anzeigen der Funktion ein Anzeigen der Funktion in einem grafischen Modell umfasst. Ein grafisches Modell ist eine Visualisierung, die dem Benutzer die Funktion oder Funktionen des Zustandsautomaten in verständlicher Weise anzeigt. Eine solche Visualisierung kann beispielsweise eine Blasendarstellung und/oder eine Listendarstellung umfassen. Insbesondere kann das grafische Modell für einen Zustandsautomaten z.B. verschiedene Symbole (beispielsweise Blasen) für verschiedene Zustände umfassen. Auch können die Bedingungen für die Übergänge zwischen den Zuständen mit grafischen Symbolen und/oder in Textform dargestellt sein.

Dadurch ist es dem Benutzer besonders einfach, den Zustandsautomaten im Kontext der gesamten Sicherheitssteuerung zu erkennen und den Parameter korrekt auszuwählen und einzugeben.

Das Verfahren kann dadurch weitergebildet werden, dass das Erfassen einer Benutzereingabe an der Eingabemaske ein Erfassen einer Manipulation des grafischen Modells umfasst und wobei der Schritt des Übertragens des Parameters an die Sicherheitssteuerung ein Übertragen der Manipulation umfasst und der Schritt des Implementierens des Parameters in dem Zustandsautomaten ein Implementieren der Manipulation umfasst.

Beispielsweise kann der Benutzer durch Betätigung einer Maus Elemente der Blasendarstellung oder der Listendarstellung in ihrer Position oder Reihenfolge verschieben und so eine andere Funktion des Zustandsautomaten bezwecken, beispielsweise verschiedene Zustände des Zustandsautomaten zu ändern oder zu tauschen.

Das Verfahren kann dadurch weitergebildet werden, dass die Schritte des Übertragens des Parameters an die Sicherheitssteuerung, des Implementierens des Parameters in dem Zustandsautomaten, des Auslesens einer Funktionsbeschreibung des Zustandsautomaten, des Übertragens der Funktionsbeschreibung an das Benutzerendgerät und/oder des Anzeigens einer Funktion des Zustandsautomaten basierend auf der Funktionsbeschreibung an dem Benutzerendgerät ohne eine Benutzereingabe erfolgen.

Hierdurch ergibt sich eine besonders benutzerfreundliche Ausgestaltung. Insbesondere kann so das erneute Anzeigen besonders schnell und ohne weitere Interaktion erfolgen. Eine optionale Verifikation oder Falsifikation kann somit besonders schnell erfolgen.

Das Verfahren kann dadurch weitergebildet werden, dass das es vor dem Schritt des Bereitstellens einer Eingabemaske an dem Benutzerendgerät ein Auslesen einer Funktionsbeschreibung eines Zustandsautomaten umfassend einen Parameter des Zustandsautomaten und ein Übertragen der Funktionsbeschreibung an ein Benutzerendgerät umfasst.

Das Verfahren kann alternativ oder zusätzlich dadurch weitergebildet werden, dass es nach dem Schritt des Bereitstellens einer Eingabemaske an dem Benutzerendgerät ein Anzeigen der zuvor ausgelesenen und übertragenen Funktionsbeschreibung in der Eingabemaske umfasst.

In dieser Ausgestaltung wird eine Funktionsbeschreibung eines bereits parametrierten und in Benutzung befindlichen Zustandsautomaten ausgelesen und optional dem Benutzer bereitgestellt. Insbesondere kann durch diese Ausführungsform eine bereits in Betrieb befindliche Sicherheitssteuerung nachträglich geändert werden.

Hierzu wird dem Benutzer die implementierte Funktion des Zustandsautomaten angezeigt, damit er diesen als Orientierungshilfe zugrunde legen kann und um die korrekte Funktion des Zustandsautomaten zu überprüfen.

Das Verfahren kann dadurch weitergebildet werden, dass das Implementieren des Parameters in dem Zustandsautomaten ein Definieren einer Übertragungsfunktion in dem Zustandsautomaten basierend auf dem Parameter umfasst.

Eine Übertragungsfunktion ist dabei eine Funktion, die einen Eingang, beispielsweise einen Eingang eines Zustandsautomaten, in einen Ausgang umwandeln kann bzw. diese Umwandlung definiert.

Die Übertragungsfunktion bewirkt dabei einen Übergang bzw. einen Wechsel des Zustandsautomaten. Beispielsweise umfasst die Übertragungsfunktion einen aktuellen Zustand, einen folgenden Zustand und eine Bedingung für den Zustandsübergang, insbesondere bezogen auf den Eingang des Zustandsautomaten. Dies kann insbesondere in booleschen Werten wiedergegeben sein.

In diesem Fall kann das zuvor beschriebene grafische Modell die Übertragungsfunktion und/oder den Zustandsautomaten visualisieren, der durch eine Benutzereingabe manipuliert werden kann.

Der Zustandsautomat kann mehrere Übertragungsfunktionen aufweisen, wobei die Übertragungsfunktionen z.B. eine Liste von Übergangsbedingungen von einem aktuellen Zustand in den nächsten Zustand umfassen können. Die Übergangsbedingungen können sich dabei auf die Eingangsdaten des Zustandsautomaten beziehen. Die Übergangsbedingung kann bevorzugt durch den Parameter verändert werden.

Das Verfahren kann dadurch weitergebildet werden, dass das Implementieren des Parameters in dem Zustandsautomaten eine Verwendung eines ersten Symbolkonverters umfasst und wobei das Auslesen der Funktionsbeschreibung des Zustandsautomaten eine Verwendung eines von dem ersten Symbolkonverter verschiedenen, zweiten Symbolkonverters umfasst.

Ein Symbolkonverter ist dabei dazu ausgebildet, Parameter, insbesondere aus dem grafischen Modell, umzuwandeln, insbesondere von einem Format in ein anderes Format. Der erste Symbolkonverter kann dazu insbesondere in einem ersten Benutzerendgerät implementiert sein bzw. davon umfasst sein und der zweite Symbolkonverter kann in einem zweiten Benutzerendgerät implementiert sein bzw. davon umfasst sein.

Hierdurch wird eine besonders sichere Parametrierung erreicht, bei der Fehler besonders schnell erkannt werden können.

Das Verfahren kann dadurch weitergebildet werden, dass der Schritt des Übertragens der Funktionsbeschreibung an ein Benutzerendgerät über einen anderen Pfad erfolgt als der Schritt des Übertragens des Parameters an die Sicherheitssteuerung.

Ein anderer Pfad meint vorliegend insbesondere einen physisch anderen Pfad, wie beispielsweise eine andere Schnittstelle, eine andere Technologie oder eine andere Leitung. Insbesondere umfasst diese Weiterbildung, dass der Parameter über einen anderen Übertragungsweg an ein anderes Benutzerendgerät übertragen wird als an die Sicherheitssteuerung.

Hierdurch wird eine besonders sichere Überprüfung des Parameters ermöglicht, da eine Verfälschung auf dem ersten Pfad durch eine Rückübertragung auf dem zweiten Pfad erkannt und gegebenenfalls korrigiert werden kann.

Das Verfahren kann dadurch weitergebildet werden, dass es sich bei dem implementierten Parameter um einen maschinenlesbaren Parameter handelt, der zuvor aus einem menschenlesbaren Parameter umgewandelt wurde. Ein menschenlesbarer Parameter ist beispielsweise eine arabische Zahl, beispielsweise eine ganze Zahl, eine Fließkommazahl und/oder eine Zeichenfolge, die beispielsweise einen Namen für einen Zustand, der durch eine Zahl abgebildet wird, umfasst. Ein maschinenlesbarer Parameter ist insbesondere eine Zahl oder ein Wert in binärer oder hexadezimaler Notation.

Die Umwandlung kann insbesondere durch einen zuvor beschriebenen Symbolkonverter erfolgen. Insbesondere kann der zuvor beschriebene erste Symbolkonverter verwendet werden, um aus dem menschenlesbaren grafischen Modell eine menschenlesbare Beschreibung des Zustandsautomaten in textueller und formaler Form zu erzeugen und diese Form in eine maschinenlesbare Parametrierung des Zustandsautomaten umzuwandeln.

Dabei kann das Umwandeln vor oder nach dem Übertragen des Parameters erfolgen. Das Umwandeln kann insbesondere in dem Benutzerendgerät oder in der Sicherheitssteuerung erfolgen.

Das Verfahren kann dadurch weitergebildet werden, dass es sich bei dem angezeigten Parameter um einen menschenlesbaren Parameter handelt, der zuvor aus einem maschinenlesbaren Parameter rückgewandelt wurde.

Die Rückwandlung kann insbesondere durch einen zuvor beschriebenen Symbolkonverter erfolgen. Insbesondere kann der zuvor beschriebene zweite Symbolkonverter verwendet werden, um aus der maschinenlesbaren Parametrierung des Zustandsautomaten eine menschenlesbare Beschreibung des Zustandsautomaten in textueller und formaler Form rückzuwandeln und aus der menschenlesbaren Beschreibung des Zustandsautomaten ein menschenlesbares grafisches Modell zu erzeugen.

Dabei kann das Rückwandeln vor oder nach dem Übertragen des Parameters erfolgen. Das Rückwandeln kann insbesondere in dem Benutzerendgerät oder in der Sicherheitssteuerung erfolgen.

Hierdurch durch die Wandlung von/in einen menschenlesbaren Parameter wird eine besonders benutzerfreundliche Parametrierung ermöglicht.

Das Verfahren kann dadurch weitergebildet werden, dass vor dem Schritt des Übertragens des Parameters an die Sicherheitssteuerung eine Plausibilitätsprüfung des Parameters erfolgt. Zusätzlich kann auch die Art der Manipulation einer Plausibilitätsprüfung unterzogen werden.

Eine Plausibilitätsprüfung kann beispielsweise eine Überprüfung auf den korrekten Datentyp des Parameters, auf eine korrekte Parameterlänge oder ob der Parameter leer ist umfassen. Ebenso kann eine Plausibilitätsprüfung auf eine nichtfunktionale Plausibilisierung der Parametrierung erfolgen, wie beispielsweise Zirkelbezüge, Schleifen, unerreichbarer Code, Mehrdeutigkeiten und/oder Überdeckungen, die somit vermieden werden können.

Das Verfahren kann dadurch weitergebildet werden, dass es, wenn die Plausibilitätsprüfung nicht bestanden ist, weiter ein Ausgeben einer Warnmeldung umfasst. Insbesondere wird, wenn die die Plausibilitätsprüfung nicht bestanden ist, der Parameter nicht an die Sicherheitssteuerung übertragen. Weiter insbesondere kann in diesem Fall erneut eine Eingabemaske an einem Benutzerendgerät bereitgestellt werden.

So wird eine besonders sichere Implementierung ermöglicht.

Durch die oben beschriebenen Ausführungsformen wird insbesondere eine besonders benutzerfreundliche und flexible Lösung zur Parametrierung von Sicherheitssteuerungen ermöglicht, die gleichzeitig sehr sicher ist.

Insbesondere kann durch die oben beschriebenen Ausführungsformen eine Parametrierung zur Laufzeit, ohne weitere Umwandlung erfolgen.

Durch die oben beschriebenen Ausführungsformen ist insbesondere eine Verwendung eines Interpreters nicht notwendig. Es wird lediglich in Abhängigkeit des internen Zustands eines Zustandsautomaten ein Ausgabeergebnis ermittelt und dieser interne Zustand des Zustandsautomaten mithilfe des Parameters dann nach Benutzerwünschen aktualisiert. Hierdurch wird eine besonders schnelle und wenig rechenintensiver Lösung ermöglicht.

Bei dem Verfahren handelt es sich insbesondere um ein computerimplementiertes Verfahren, das durch einen oder mehrere Prozessoren ausgeführt werden kann.

Die eingangs genannte Aufgabe wird auch gelöst durch eine Vorrichtung zur Parametrierung eines Zustandsautomaten von Funktionsblöcken einer Sicherheitssteuerung. Die Vorrichtung umfasst einen Prozessor und einen Speicher. Der Speicher umfasst dabei Code, der, wenn er von dem Prozessor ausgeführt wird, ein Verfahren nach einem der vorgenannten Ausführungsformen durchführt.

Bezüglich der Ausführungsformen und Vorteile der Vorrichtung wird auf die oben beschriebenen Ausführungsformen und Vorteile des Verfahrens verwiesen.

Ausführungsformen der Erfindung werden nun unter Bezugnahme auf die folgenden Figuren näher erläutert. Es zeigen:
- Fig. 1: eine Ansicht eines Ablaufdiagramms einer Ausführungsform eines Verfahrens zur Parametrierung eines Zustandsautomaten von Funktionsblöcken einer Sicherheitssteuerung;
- Fig. 2: eine Ansicht eines Ablaufdiagramms einer weiteren Ausführungsform eines Verfahrens zur Parametrierung eines Zustandsautomaten von Funktionsblöcken einer Sicherheitssteuerung;
- Fig. 3: eine Ansicht eines Ablaufdiagramms einer weiteren Ausführungsform eines Verfahrens zur Parametrierung eines Zustandsautomaten von Funktionsblöcken einer Sicherheitssteuerung; und
- Fig. 4: eine schematische Ansicht einer Ausführungsform einer Vorrichtung zur Parametrierung eines Zustandsautomaten von Funktionsblöcken einer Sicherheitssteuerung.

Dabei bezeichnen gleiche Bezugszeichen gleiche oder ähnliche Merkmale.

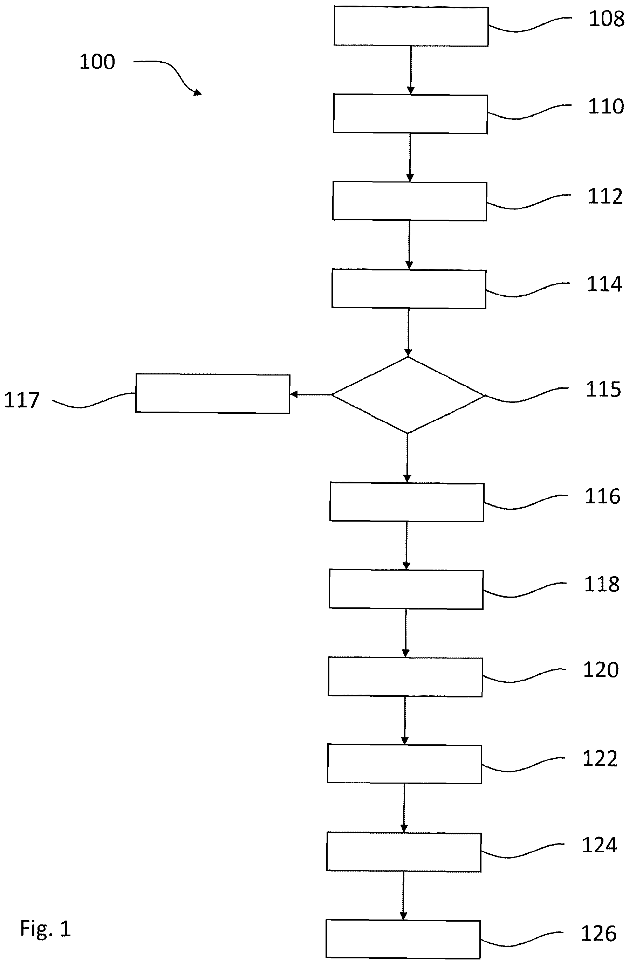

Fig. 1 zeigt eine Ansicht eines Ablaufdiagramms einer Ausführungsform eines Verfahrens 100 zur Parametrierung eines Zustandsautomaten von Funktionsblöcken einer Sicherheitssteuerung.

Das Verfahren 100 beginnt mit einem Schritt 108, in dem eine Eingabemaske an einem Benutzerendgerät bereitgestellt wird.

In einem folgenden Schritt 110 wird eine Benutzereingabe an der Eingabemaske erfasst. Die Benutzereingabe definiert dabei einen Parameter für eine Funktion des Zustandsautomaten. Der Parameter liegt dabei insbesondere in einem menschenlesbaren Format vor.

In einem weiteren Schritt 112 wird der menschenlesbare Parameter in ein maschinenlesbares Format umgewandelt.

In einem folgenden Schritt 114 wird eine Plausibilitätsprüfung durchgeführt.

Wenn die Plausibilitätsprüfung nicht bestanden ist, fährt das Verfahren in der Entscheidung 115 nach links zum Schritt 117 fort.

Im dann folgenden Schritt 117 wird eine Warnmeldung ausgegeben und das Verfahren endet. Alternativ kann das Verfahren zum Schritt 108 zurückkehren und dort erneut beginnen.

Wenn hingegen die Plausibilitätsprüfung bestanden ist, fährt das Verfahren in der Entscheidung 115 nach unten zum Schritt 116 fort.

Im dann folgenden Schritt 116 wird der maschinenlesbare Parameter an die Sicherheitssteuerung übertragen.

In einem weiteren Schritt 118 wird der maschinenlesbare Parameter in dem Zustandsautomaten implementiert

In einem folgenden Schritt 120 wird eine Funktionsbeschreibung des Zustandsautomaten ausgelesen. Die Funktionsbeschreibung umfasst dabei zumindest den zuvor implementierten, maschinenlesbaren Parameter.

In einem weiteren Schritt 122 wir die ausgelesene Funktionsbeschreibung an ein Benutzerendgerät übertragen.

In einem folgenden Schritt 124 wird der maschinenlesbare Parameter aus der Funktionsbeschreibung in einen menschenlesbaren Parameter umgewandelt bzw. rückgewandelt.

In einem letzten Schritt 126 wird eine Funktion des Zustandsautomaten basierend auf der Funktionsbeschreibung an dem Benutzerendgerät angezeigt und das Verfahren 100 endet.

Es versteht sich, dass die Schritte des Verfahrens 100 auch in einer anderen als der gezeigten Reihenfolge ausgeführt werden können. Insbesondere kann der Schritt 112 des Umwandelns auch nach der Plausibilitätsprüfung im Schritt 110 oder nach dem Übertragen im Schritt 116 erfolgen. Ebenso insbesondere kann der Schritt 124 des Rückwandelns auch vor dem Übertragen im Schritt 122 erfolgen.

Insbesondere die Schritte 112, 114, die Entscheidung 115, sowie die Schritte 117 oder 116, 118, 120, 122, 124 und 126 können dabei ohne eine Benutzereingabe erfolgen.

Insbesondere der Schritt 120 kann dabei unmittelbar und ohne weiteren Zwischenschritt auf den Schritt 118 folgen.

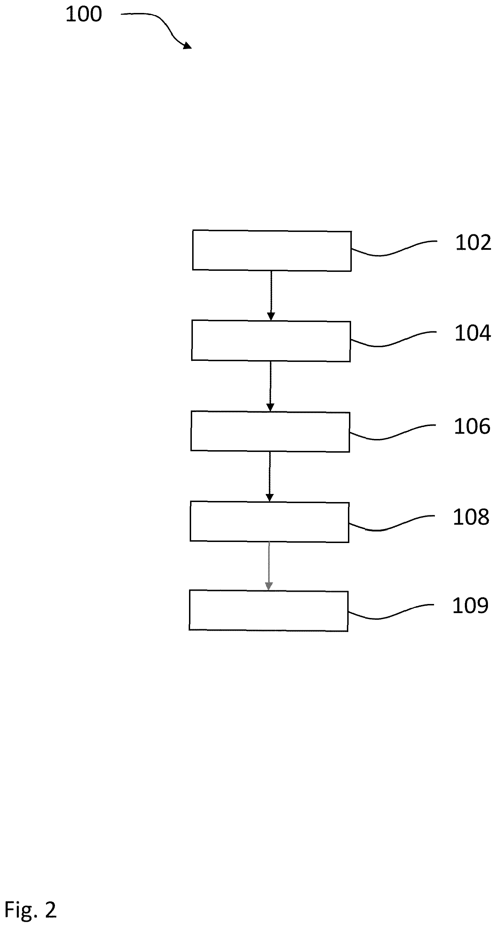

Die in dieser Fig. 1 gezeigte Ausführungsform des Verfahrens 100 ist insbesondere geeignet, wenn der Zustandsautomat der Sicherheitsfunktion zum ersten Mal parametriert werden soll. Wenn der Zustandsautomat der Sicherheitsfunktion bereits zuvor parametriert wurde, kann das Verfahren 100 zusätzlich die im Zusammenhang mit Fig. 2 beschriebenen Schritte aufweisen.

Fig. 2 zeigt eine Ansicht eines Ablaufdiagramms einer weiteren Ausführungsform des Verfahrens 100 zur Parametrierung eines Zustandsautomaten von Funktionsblöcken einer Sicherheitssteuerung.

Dabei beginnt das Verfahren abweichend von der in Fig. 1 gezeigten Ausführungsform mit einem Schritt 102, in dem eine Funktionsbeschreibung eines Zustandsautomaten ausgelesen wird, wobei die Funktionsbeschreibung zumindest einen Parameter umfasst. Der Parameter ist insbesondere ein maschinenlesbarer Parameter.

In einem weiteren Schritt 104 wird die Funktionsbeschreibung an ein Benutzerendgerät übertragen.

In einem folgenden Schritt 106 wird der maschinenlesbare Parameter aus der Funktionsbeschreibung in einen menschenlesbaren Parameter umgewandelt.

In einem weiteren Schritt 108, der auch in Fig. 1 gezeigt ist, wird eine Eingabemaske an dem Benutzerendgerät bereitgestellt.

In einem darauffolgenden Schritt 109 wird die Funktionsbeschreibung in der Eingabemaske angezeigt.

Nach dem Schritt 109 kann das Verfahren mit dem Schritt 110 und den darauffolgenden, wie in Fig. 1 gezeigt, fortfahren.

Es versteht sich, dass die Schritte des Verfahrens 100 auch in einer anderen als der gezeigten Reihenfolge ausgeführt werden können. Insbesondere kann der Schritt 106 des Umwandelns auch vor dem Übertragen im Schritt 104 erfolgen.

Die in dieser Fig. 2 gezeigte Ausführungsform des Verfahrens 100 ist insbesondere geeignet, wenn eine bestehende Parametrierung des Zustandsautomats geändert oder überprüft werden soll. Insbesondere kann vor dem Schritt 102 eine Benutzereingabe zur erneuten Parametrierung an dem Benutzerendgerät empfangen werden, welche das in Fig. 2 gezeigte Verfahren auslöst.

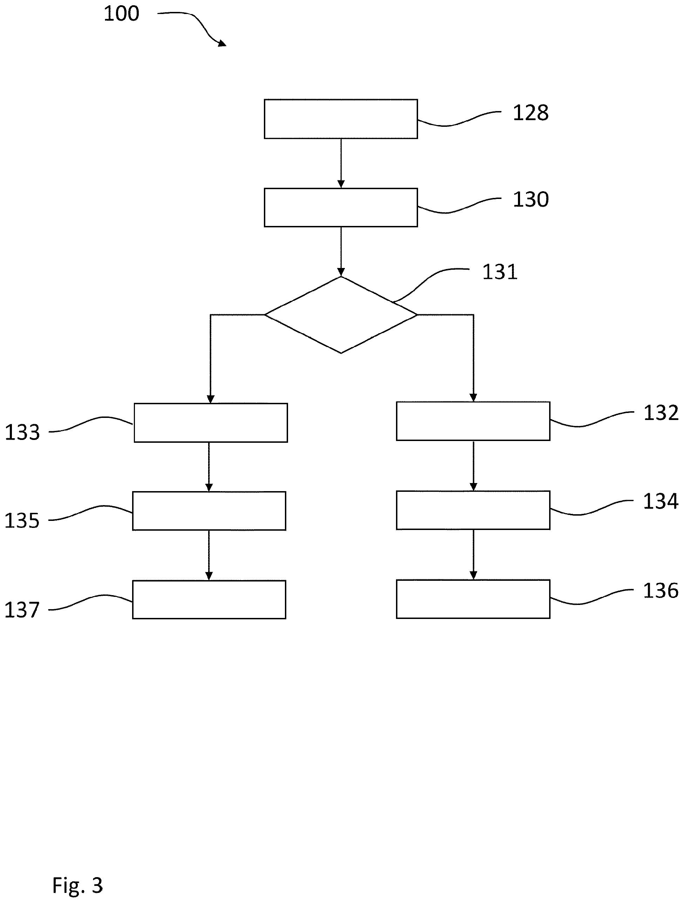

Fig. 3 zeigt eine Ansicht eines Ablaufdiagramms einer weiteren Ausführungsform des Verfahrens 100 zur Parametrierung eines Zustandsautomats von Funktionsblöcken einer Sicherheitssteuerung.

Dabei schließen sich die in Fig. 3 gezeigten Schritte beispielsweise an den Schritt 126, wie in Fig. 1 gezeigt, an, insbesondere unmittelbar.

Im Schritt 128 wird eine Aufforderung zur Verifikation oder Falsifikation der angezeigten Funktion an dem Benutzerendgerät angezeigt.

In einem weiteren Schritt 130 wird eine Benutzereingabe an dem Benutzerendgerät empfangen, wobei die Benutzereingabe eine Verifikation oder Falsifikation der angezeigten Funktion basierend auf dem Parameter umfasst.

Wenn die Benutzereingabe eine Falsifikation der angezeigten Funktion umfasst, fährt das Verfahren in der Entscheidung 131 nach links zum Schritt 133 fort.

Im dann folgenden Schritt 133 wird eine Warnmeldung ausgegeben.

Im darauffolgenden Schritt 135 wird eine Sicherheitsfunktion der Sicherheitssteuerung ausgelöst.

Im darauffolgenden Schritt 137 wird eine Eingabemaske an einem Benutzerendgerät bereitgestellt. Nach dem Schritt 137, der mit dem Schritt 108, wie in Fig. 1 gezeigt, identisch sein kann, kann das Verfahren 100 mit dem Schritt 110 und den darauffolgenden Schritten, wie in Fig. 1 gezeigt, fortfahren.

Wenn hingegen die Benutzereingabe eine Verifikation der angezeigten Funktion umfasst, fährt das Verfahren in der Entscheidung nach rechts zum Schritt 132 fort.

Im Schritt 132 wird der menschenlesbare Parameter in einen maschinenlesbaren Parameter umgewandelt.

Im folgenden Schritt 134 wird der maschinenlesbare Parameter erneut an die Sicherheitssteuerung übertragen.

In einem weiteren Schritt 136 wird der Parameter in dem Zustandsautomat implementiert.

Danach kann das Verfahren enden. Alternativ kann das Verfahren zum Schritt 108, wie in Fig. 1 gezeigt, oder zum Schritt 102, wie in Fig. 2 gezeigt, zurückkehren und dort erneut beginnen.

Es versteht sich, dass die Schritte des Verfahrens 100 auch in einer anderen als der gezeigten Reihenfolge ausgeführt werden können. Insbesondere kann der Schritt 132 des Umwandelns auch nach dem Übertragen im Schritt 134 erfolgen.

Insbesondere kann der Schritt 128 unmittelbar und ohne weiteren Zwischenschritt auf den in Fig. 1 gezeigten Schritt 126 erfolgen.

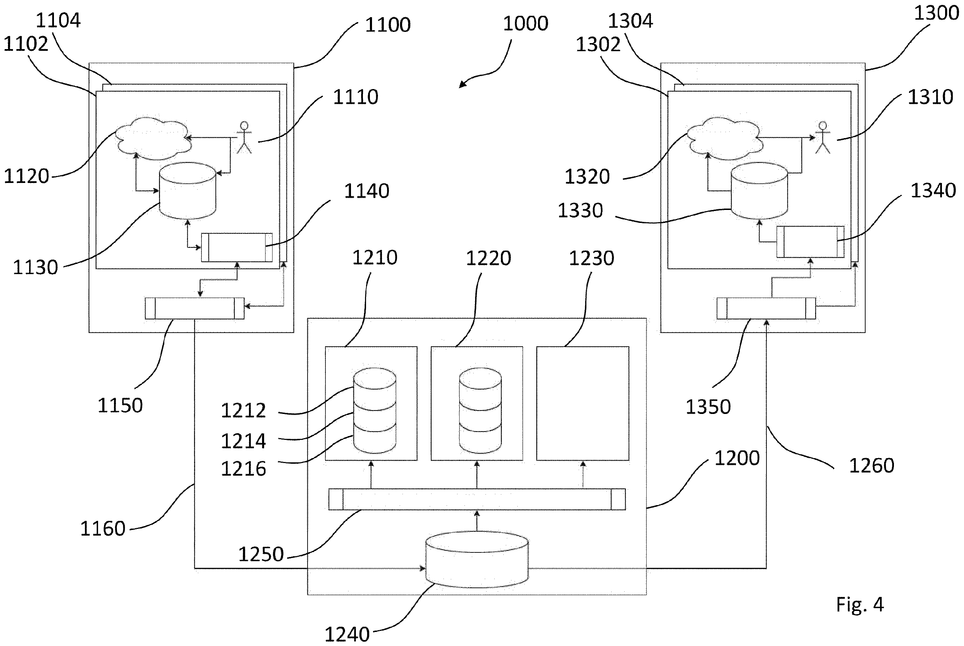

Fig. 4 zeigt eine schematische Ansicht einer Ausführungsform einer Vorrichtung 1000 zur Parametrierung eines Zustandsautomats von Funktionsblöcken einer Sicherheitssteuerung. Die Vorrichtung 1000 ist dabei insbesondere ausgebildet einen oder mehrere Schritte der oben im Zusammenhang mit den Fig. 1 bis 3 beschriebenen Ausführungsformen des Verfahrens 100 auszuführen und/oder Mittel dafür bereitzustellen. Dazu umfasst die Vorrichtung 1000 einen oder mehrere Prozessoren und einen oder mehrere Speicher, die aus Gründen der Übersichtlichkeit nicht in Fig. 4 abgebildet sind.

Die Vorrichtung 1000 umfasst ein erstes Benutzerendgerät 1100, eine Sicherheitssteuerung 1200 und ein zweites, von dem ersten Benutzerendgerät 1100 verschiedenes Benutzerendgerät 1300.

Das erste Benutzerendgerät 1100 ist dabei über einen ersten Pfad 1160 mit der Sicherheitssteuerung 1200 verbunden und das zweite Benutzerendgerät 1300 ist über einen von dem ersten Pfad 1160 verschiedenen, zweiten Pfad 1260 mit der Sicherheitssteuerung 1200 verbunden.

Die Sicherheitssteuerung 1200 umfasst dabei mehrere Funktionsblöcke, von denen beispielhaft ein erster Funktionsblock 1210, ein zweiter Funktionsblock 1220 und ein dritter Funktionsblock 1230 abgebildet sind. Jeder Funktionsblock ist dazu durch eine oder mehrere Zustandsautomaten definiert, wobei jeder Parameter eine Funktionen des Funktionsblocks, die durch den Zustandsautomaten erfüllt wird, definiert und von denen im ersten Funktionsblock 1210 beispielhaft ein erster Parameter 1212, ein zweiter Parameter 1214 und ein dritter Parameter 1216 mit Bezugszeichen versehen sind.

Das erste Benutzerendgerät 1100 weist dabei mehrere Parametrierungsumgebungen auf, von denen beispielhaft eine erste Parametrierungsumgebung 1102 und eine zweite Parametrierungsumgebung 1104 gezeigt ist. Dabei kann jede Parametrierungsumgebung für einen einzelnen Parameter der Sicherheitssteuerung 1200 stehen.

Ebenso weist das zweite Benutzerendgerät 1300 mehrere Parametrierungsumgebungen auf, von denen beispielhaft eine erste Parametrierungsumgebung 1302 und eine zweite Parametrierungsumgebung 1304 gezeigt ist, die zu den Parametrierungsumgebungen des ersten Benutzerendgeräts 1100 korrespondieren können. Das bedeutet, dass die erste Parametrierungsumgebung 1302 des zweiten Benutzerendgeräts 1300 denselben Parameter betrifft wie die die erste Parametrierungsumgebung 1102 des ersten Benutzerendgeräts 1100.

An dem ersten Benutzerendgerät 1100 wird einem ersten Benutzer 1110 eine Funktionsvisualisierung 1120 einer Funktion eines Zustandsautomats bereitgestellt. Die Funktionsvisualisierung 1120 umfasst dabei eine Funktionsbeschreibung des Zustandsautomats, die zumindest auf dem Parameter basiert. Die Funktionsvisualisierung 1120 zeigt dabei die Funktion des Zustandsautomats in einem grafischen Modell an, wie beispielsweise einer Blasendarstellung.

Die Funktionsvisualisierung 1120 umfasst auch eine Eingabemaske. Die Eingabemaske kann dazu weitergehende Informationen zu dem Zustandsautomat und/oder der Sicherheitssteuerung sowie eine eindeutige Identifizierung des Zustandsautomats umfassen, wie beispielsweise ein grafisches Modell der Funktionen.

An der Eingabemaske wird eine Benutzereingabe des Benutzer 1110 erfasst. Die Benutzereingabe umfasst dabei einen menschenlesbaren Parameter für einen Zustandsautomat. Die Benutzereingabe kann dabei auch eine Manipulation des grafischen Modells umfassen, die erfasst wird.

Dieser menschenlesbare Parameter wird mithilfe eines formalen Modells 1130, und eines Symbolkonverters 1140 in einen maschinenlesbaren Parameter umgewandelt. Mehrere Parameter aus den verschiedenen Parametrierungsumgebungen werden mithilfe eines Sequenzers 1150 sequenziert und sodann über den ersten Pfad 1160 an die Sicherheitssteuerung 1200 übertragen.

Dort werden die Parameter mithilfe eines Implementierungsmoduls 1240 und eines Desequenzers 1250 in den betreffenden Zustandsautomaten implementiert. Dabei wird eine Übertragungsfunktion in dem Zustandsautomaten basierend auf dem Parameter definiert.

Die implementierten maschinenlesbaren Parameter werden sodann mithilfe des Implementierungsmoduls 1240 erneut ausgelesen und über den zweiten Pfad 1260 an das zweite Benutzerendgerät 1300 übertragen.

Dort werden die maschinenlesbaren Parameter mithilfe eines Desequenzers 1350 desequenziert und mithilfe eines Symbolkonverters 1340 und eines formalen Modells 1330 in menschenlesbare Parameter umgewandelt. Die einzelnen Parameter werden dann einer Funktionsvisualisierung 1320, die im Wesentlichen der Funktionsvisualisierung 1120 des ersten Benutzerendgeräts 1100 entspricht, in verschiedenen Parametrierungsumgebungen einem zweiten Benutzer 1310 angezeigt.

Dazu wird dem zweiten Benutzer 1310 in der Funktionsvisualisierung 1320 eine Aufforderung zur Verifikation oder Falsifikation des Parameters bereitgestellt. In Abhängigkeit von der Verifikation oder Falsifikation wird entweder der verifizierte Parameter über den zweiten Pfad 1260 an die Sicherheitssteuerung 1200 zurückübertragen oder es wird eine Eingabemaske an dem zweiten Benutzerendgerät 1300 zur erneuten Eingabe eines korrekten Parameters angezeigt. Dazu kann eine Warnmeldung ausgegeben werden und/oder eine Sicherheitsfunktion der Sicherheitssteuerung ausgelöst werden.

### Bezugszeichenliste

- 100: Verfahren
- 102: Verfahrensschritt
- 104: Verfahrensschritt
- 106: Verfahrensschritt
- 108: Verfahrensschritt
- 109: Verfahrensschritt
- 110: Verfahrensschritt
- 112: Verfahrensschritt
- 114: Verfahrensschritt
- 115: Entscheidung
- 116: Verfahrensschritt
- 117: Verfahrensschritt
- 118: Verfahrensschritt
- 120: Verfahrensschritt
- 122: Verfahrensschritt
- 124: Verfahrensschritt
- 126: Verfahrensschritt
- 128: Verfahrensschritt
- 130: Verfahrensschritt
- 131: Entscheidung
- 132: Verfahrensschritt
- 133: Verfahrensschritt
- 134: Verfahrensschritt
- 135: Verfahrensschritt
- 136: Verfahrensschritt
- 137: Verfahrensschritt
- 1000: Vorrichtung
- 1100: Benutzerendgerät
- 1102: Parametrierungsumgebung
- 1104: Parametrierungsumgebung
- 1110: Benutzer
- 1120: Funktionsvisualisierung
- 1130: Formales Modell
- 1140: Symbolkonverter
- 1150: Sequenzer
- 1160: Pfad
- 1200: Sicherheitssteuerung
- 1210: Funktionsblock
- 1212: Parameter
- 1214: Parameter
- 1216: Parameter
- 1220: Funktionsblock
- 1230: Funktionsblock
- 1240: Implementierungsmodul
- 1250: Desequenzer
- 1260: Pfad
- 1300: Benutzerendgerät
- 1302: Parametrierungsumgebung
- 1304: Parametrierungsumgebung
- 1310: Benutzer
- 1320: Funktionsvisualisierung
- 1330: Formales Modell
- 1340: Symbolkonverter
- 1350: Desequenzer

## Patentansprüche

1. Verfahren (100) zur Parametrierung eines Zustandsautomaten von Funktionsblöcken (1210, 1220, 1230) einer Sicherheitssteuerung (1200), umfassend:
- Bereitstellen (108) einer Eingabemaske an einem Benutzerendgerät (1100);
- Erfassen (110) einer Benutzereingabe an der Eingabemaske, wobei die Benutzereingabe einen Parameter für eine Funktion des Zustandsautomaten definiert;
- Übertragen (116) des Parameters an die Sicherheitssteuerung (1200);
- Implementieren (118) des Parameters in dem Zustandsautomaten;
- Auslesen (120) einer Funktionsbeschreibung des Zustandsautomaten umfassend den zuvor implementierten Parameter;
- Übertragen (122) der Funktionsbeschreibung an ein Benutzerendgerät (1300); und
- Anzeigen (126) einer Funktion des Zustandsautomaten basierend auf der Funktionsbeschreibung auf einem Bildschirm des Benutzerendgeräts (1300).

2. Verfahren (100) nach dem vorhergehenden Anspruch 1, weiter umfassend:
- Anzeigen (128) einer Aufforderung zur Verifikation oder Falsifikation der angezeigten Funktion an dem Benutzerendgerät (1300);
- Erfassen (130) einer Benutzereingabe an dem Benutzerendgerät (1300), wobei die Benutzereingabe eine Verifikation oder Falsifikation der angezeigten Funktion umfasst;
wenn die Benutzereingabe eine Falsifikation der angezeigten Funktion umfasst:
- Bereitstellen (137) einer Eingabemaske an einem Benutzerendgerät (1300); und
wenn die Benutzereingabe eine Verifikation der angezeigten Funktion umfasst:
- Übertragen (134) des Parameters an die Sicherheitssteuerung (1200); und
- Implementieren (136) des Parameters in dem Zustandsautomaten.

3. Verfahren (100) nach dem vorhergehenden Anspruch 2, wobei das Verfahren (100), wenn die Benutzereingabe eine Falsifikation der angezeigten Funktion umfasst, weiter umfasst:
- Ausgeben (133) einer Warnmeldung.

4. Verfahren (100) nach einem der vorhergehenden Ansprüche 2 oder 3, wobei das Verfahren (100), wenn die Benutzereingabe eine Falsifikation der angezeigten Funktion umfasst, weiter umfasst:
- Auslösen (135) einer Sicherheitsfunktion der Sicherheitssteuerung (1200).

5. Verfahren (100) nach einem der vorhergehenden Ansprüche, wobei das Anzeigen (126) der Funktion ein Anzeigen der Funktion in einem grafischen Modell umfasst.

6. Verfahren (100) nach dem vorhergehenden Anspruch 5, wobei das Erfassen (110) einer Benutzereingabe an der Eingabemaske ein Erfassen einer Manipulation des grafischen Modells umfasst und wobei der Schritt des Übertragens (116) des Parameters an die Sicherheitssteuerung (1200) ein Übertragen der Manipulation umfasst und der Schritt des Implementierens (118) des Parameters in dem Zustandsautomaten ein Implementieren der Manipulation umfasst.

7. Verfahren (100) nach einem der vorhergehenden Ansprüche, wobei die Schritte:
- Übertragen (116) des Parameters an die Sicherheitssteuerung (1200);
- Implementieren (118) des Parameters in dem Zustandsautomaten;
- Auslesen (120) einer Funktionsbeschreibung des Zustandsautomaten;
- Übertragen (122) der Funktionsbeschreibung an das Benutzerendgerät (1300); und
- Anzeigen (126) einer Funktion des Zustandsautomaten basierend auf der Funktionsbeschreibung an dem Benutzerendgerät (1300); ohne eine Benutzereingabe erfolgen.

8. Verfahren (100) nach einem der vorhergehenden Ansprüche, wobei das Verfahren (100) vor dem Schritt des Bereitstellens (108) einer Eingabemaske an dem Benutzerendgerät umfasst:
- Auslesen (102) einer Funktionsbeschreibung eines Zustandsautomaten umfassend einen Parameter;
- Übertragen (104) der Funktionsbeschreibung an ein Benutzerendgerät (1200); und wobei optional das Verfahren (100) nach dem Schritt des Bereitstellens (108) einer Eingabemaske an dem Benutzerendgerät (1200) umfasst:
- Anzeigen (109) der Funktionsbeschreibung in der Eingabemaske.

9. Verfahren (100) nach einem der vorhergehenden Ansprüche, wobei das Implementieren (118) des Parameters in dem Zustandsautomaten ein Definieren einer Übertragungsfunktion in dem Zustandsautomaten basierend auf dem Parameter umfasst.

10. Verfahren (100) nach einem der vorhergehenden Ansprüche, wobei das Implementieren (118) des Parameters in dem Zustandsautomaten eine Verwendung eines ersten Symbolkonverters (1140) umfasst und wobei das Auslesen (120) der Funktionsbeschreibung des Zustandsautomaten eine Verwendung eines von dem ersten Symbolkonverter (1140) verschiedenen, zweiten Symbolkonverters (1340) umfasst.

11. Verfahren (100) nach einem der vorhergehenden Ansprüche, wobei der Schritt des Übertragens (122) der Funktionsbeschreibung an ein Benutzerendgerät (1300) über einen anderen Pfad erfolgt als der Schritt des Übertragens (116) des Parameters an die Sicherheitssteuerung (1200).

12. Verfahren (100) nach einem der vorhergehenden Ansprüche, wobei vor dem Schritt des Übertragens (116) des Parameters an die Sicherheitssteuerung (1200) eine Plausibilitätsprüfung (114) des Parameters erfolgt.

13. Verfahren (100) nach dem vorhergehenden Anspruch 12, wobei das Verfahren, wenn die Plausibilitätsprüfung (114) nicht bestanden ist, weiter den Schritt umfasst:
- Ausgeben (117) einer Warnmeldung.

14. Vorrichtung (1000) zur Parametrierung eines Zustandsautomaten von Funktionsblöcken (1210, 1220, 1230) einer Sicherheitssteuerung (1200), umfassend:
- einen Prozessor; und
- einen Speicher, der Code umfasst, der, wenn er von dem Prozessor ausgeführt wird, ein Verfahren (100) nach einem der vorhergehenden Ansprüche durchführt.

## Claims

1. A method (100) for parameterizing a state machine of function blocks (1210, 1220, 1230) of a safety controller (1200), comprising:
- providing (108) an input mask at a user end device (1100);
- detecting (110) a user input at the input mask, wherein the user input defines a parameter for a function of the state machine;
- transmitting (116) the parameter to the safety controller (1200);
- implementing (118) the parameter in the state machine;
- reading out (120) a functional description of the state machine comprising the previously implemented parameter;
- transmitting (122) the functional description to a user end device (1300); and
- displaying (126) a function of the state machine based on the functional description on a screen of the user end device (1300).

2. A method according to the preceding claim 1, further comprising:
- displaying (128) a request for verifying or falsifying the displayed function at the user end device (1300);
- detecting (130) a user input at the user end device (1300), wherein the user input comprises a verification or falsification of the displayed function;
if the user input comprises a falsification of the displayed function:
- providing (137) an input mask at a user end device (1300); and
if the user input comprises a verification of the displayed function:
- transmitting (134) the parameter to the safety controller (1200); and
- implementing (136) the parameter in the state machine.

3. A method (100) according to the preceding claim 2, wherein, if the user input comprises a falsification of the displayed function, the method (100) further comprises:
- outputting (133) a warning message.

4. A method (100) according to one of the preceding claims 2 or 3, wherein, if the user input comprises a falsification of the displayed function, the method (100) further comprises:
- triggering (135) a safety function of the safety controller (1200).

5. A method (100) according to any one of the preceding claims, wherein the displaying (126) of the function comprises displaying the function in a graphical model.

6. A method (100) according to the preceding claim 5, wherein the detecting (110) of a user input at the input mask comprises detecting a manipulation of the graphical model, and wherein the step of transmitting (116) the parameter to the safety controller (1200) comprises transmitting the manipulation, and the step of implementing (118) the parameter in the state machine comprises implementing the manipulation.

7. A method (100) according to any one of the preceding claims, wherein the steps:
- transmitting (116) the parameter to the safety controller (1200);
- implementing (118) the parameter in the state machine;
- reading out (120) a functional description of the state machine;
- transmitting (122) the functional description to the user end device (1300); and
- displaying (126) a function of the state machine based on the functional description at the user end device (1300)
take place without a user input.

8. A method (100) according to any one of the preceding claims, wherein the method (100) comprises prior to the step of providing (108) an input mask to the user end device:
- reading out (102) a functional description of a state machine comprising a parameter;
- transmitting (104) the functional description to a user end device (1200); and wherein, optionally, the method (100) comprises after the step of providing (108) an input mask to the user end device (1200):
- displaying (109) the functional description in the input mask.

9. A method (100) according to any one of the preceding claims, wherein the implementing (118) of the parameter in the state machine comprises defining a transfer function in the state machine based on the parameter.

10. A method (100) according to any one of the preceding claims, wherein the implementing (118) of the parameter in the state machine comprises using a first symbol converter (1140), and wherein the reading out (120) of the functional description of the state machine comprises using a second symbol converter (1340) different from the first symbol converter (1140).

11. A method (100) according to any one of the preceding claims, wherein the step of transmitting (122) the functional description to a user end device (1300) takes place via a different path than the step of transmitting (116) the parameter to the safety controller (1200).

12. A method (100) according to any one of the preceding claims, wherein a plausibility check (114) of the parameter takes place before the step of transmitting (116) the parameter to the safety controller (1200).

13. A method (100) according to the preceding claim 12, wherein, if the plausibility check (114) is not passed, the method further comprises the step:
- outputting (117) a warning message.

14. An apparatus (1000) for parameterizing a state machine of function blocks (1210, 1220, 1230) of a safety controller (1200), comprising:
- a processor; and
- a memory that comprises the code which, when it is executed by the processor, performs a method (100) according to any one of the preceding claims.

## Revendications

1. Procédé (100) de paramétrage d'un automate fini de blocs fonctionnels (1210, 1220, 1230) d'un système de commande de sécurité (1200), consistant à :
- fournir (108) un masque d'entrée au niveau d'un terminal utilisateur (1100) ;
- saisir (110) une entrée utilisateur au niveau du masque d'entrée, l'entrée utilisateur définissant un paramètre pour une fonction de l'automate fini ;
- transmettre (116) le paramètre au système de commande de sécurité (1200) ;
- mettre en oeuvre (118) le paramètre dans l'automate fini ;
- lire (120) une description de fonction de l'automate fini comprenant le paramètre mis en oeuvre précédemment ;
- transmettre (122) la description de fonction à un terminal utilisateur (1300) ; et
- afficher (126) sur un écran d'affichage du terminal utilisateur (1300) une fonction de l'automate fini en se basant sur la description de fonction.

2. Procédé (100) selon la revendication précédente 1, consistant en outre à :
- afficher (128) sur le terminal utilisateur (1300) une demande de validation ou d'invalidation de la fonction affichée ;
- saisir (130) une entrée utilisateur au niveau du terminal utilisateur (1300), l'entrée utilisateur comprenant une validation ou une invalidation de la fonction affichée ;
si l'entrée utilisateur comprend une invalidation de la fonction affichée :
- fournir (137) un masque d'entrée au niveau d'un terminal utilisateur (1300) ; et
si l'entrée utilisateur comprend une validation de la fonction affichée :
- transmettre (134) le paramètre au système de commande de sécurité (1200) ; et
- mettre en oeuvre (136) le paramètre dans l'automate fini.

3. Procédé (100) selon la revendication précédente 2,
dans lequel, si l'entrée utilisateur comprend une invalidation de la fonction affichée, le procédé (100) consiste en outre à :
- émettre (133) un message d'avertissement.

4. Procédé (100) selon l'une des revendications précédentes 2 ou 3,
dans lequel, si l'entrée utilisateur comprend une invalidation de la fonction affichée, le procédé (100) consiste en outre à :
- déclencher (135) une fonction de sécurité du système de commande de sécurité (1200).

5. Procédé (100) selon l'une des revendications précédentes,
dans lequel l'affichage (126) de la fonction consiste à afficher la fonction dans un modèle graphique.

6. Procédé (100) selon la revendication précédente 5,
dans lequel la saisie (110) d'une entrée utilisateur au niveau du masque d'entrée consiste à saisir une manipulation du modèle graphique, et
l'étape de transmission (116) du paramètre au système de commande de sécurité (1200) consiste à transmettre la manipulation, et
l'étape de mise en oeuvre (118) du paramètre dans l'automate fini consiste à mettre en oeuvre la manipulation.

7. Procédé (100) selon l'une des revendications précédentes,
dans lequel les étapes consistant à :
- transmettre (116) le paramètre au système de commande de sécurité (1200) ;
- mettre en oeuvre (118) le paramètre dans l'automate fini ;
- lire (120) une description de fonction de l'automate fini ;
- transmettre (122) la description de fonction au terminal utilisateur (1300) ; et
- afficher (126) sur le terminal utilisateur (1300) une fonction de l'automate fini en se basant sur la description de fonction ;
se font sans entrée utilisateur.

8. Procédé (100) selon l'une des revendications précédentes,
dans lequel, avant l'étape de fourniture (108) d'un masque d'entrée au niveau du terminal utilisateur, le procédé (100) consiste à :
- lire (102) une description de fonction d'un automate fini, comprenant un paramètre ;
- transmettre (104) la description de fonction à un terminal utilisateur (1200) ;
et dans lequel, en option, après l'étape de fourniture (108) d'un masque d'entrée au niveau du terminal utilisateur (1200), le procédé (100) consiste à :
- afficher (109) la description de fonction dans le masque d'entrée.

9. Procédé (100) selon l'une des revendications précédentes,
dans lequel la mise en oeuvre (118) du paramètre dans l'automate fini consiste à définir une fonction de transmission dans l'automate fini en se basant sur le paramètre.

10. Procédé (100) selon l'une des revendications précédentes,
dans lequel la mise en oeuvre (118) du paramètre dans l'automate fini consiste à utiliser un premier convertisseur de symboles (1140), et
la lecture (120) de la description de fonction de l'automate fini consiste à utiliser un deuxième convertisseur de symboles (1340) différent du premier convertisseur de symboles (1140).

11. Procédé (100) selon l'une des revendications précédentes,
dans lequel l'étape de transmission (122) de la description de fonction à un terminal utilisateur (1300) est réalisée par un chemin différent de celui de l'étape de transmission (116) du paramètre au système de commande de sécurité (1200).

12. Procédé (100) selon l'une des revendications précédentes,
dans lequel un test de vraisemblance (114) du paramètre est effectué avant l'étape de transmission (116) du paramètre au système de commande de sécurité (1200).

13. Procédé (100) selon la revendication précédente 12,
dans lequel, si le test de vraisemblance (114) n'est pas réussi, le procédé comprend en outre l'étape consistant à :
- émettre (117) un message d'avertissement.

14. Dispositif (1000) de paramétrage d'un automate fini de blocs fonctionnels (1210, 1220, 1230) d'un système de commande de sécurité (1200), comprenant :
- un processeur ; et
- une mémoire comprenant un code qui, lorsqu'il est exécuté par le processeur, met en oeuvre un procédé (100) selon l'une des revendications précédentes.
